**Europäisches Patentamt**

(19) **European Patent Office**

**Office européen des brevets**

(11) Veröffentlichungsnummer: **0 071 994**
**B1**

(12) # EUROPÄISCHE PATENTSCHRIFT

(45) Veröffentlichungstag der Patentschrift:
21.08.85

(51) Int. Cl.⁴: **F 16 J 1/16, F 02 F 3/00**

(21) Anmeldenummer: **82107121.4**

(22) Anmeldetag: **06.08.82**

(54) **Kolben-Baugruppe.**

(30) Priorität: **10.08.81 US 291213**

(43) Veröffentlichungstag der Anmeldung:
**16.02.83 Patentblatt 83/7**

(45) Bekanntmachung des Hinweises auf die Patenterteilung:
**21.08.85 Patentblatt 85/34**

(84) Benannte Vertragsstaaten:
**AT BE CH DE FR GB IT LI SE**

(56) Entgegenhaltungen:
**DE - B - 1 049 628
DE - C - 1 025 671
US - A - 2 770 511
US - A - 2 797 135**

(73) Patentinhaber: **DEERE & COMPANY, 1 John Deere
Road, Moline Illinois 61265 (US)**

(72) Erfinder: **LaBouff, Gary Alan, 700 Warren Road, Ithaca
New York 14850 (US)**

(74) Vertreter: **Gramm, Werner, Dipl.-Ing., Patentanwälte
Gramm + Lins Theodor-Heuss-Strasse 2,
D-3300 Braunschweig (DE)**

## Beschreibung

Die Erfindung betrifft eine Kolben-Baugruppe, bestehend aus einem Kolben mit einer durchgehenden Querbohrung, in die ein hohlzylindrischer Kolbenbolzen eingesetzt ist, der durch das durchbohrte Kupplungsteil einer Kurbelstange geführt ist und zu seiner Verstärkung in seiner Bohrung zwei eingepreßte Stopfen aufweist, die einer Verformung des Kolbenbolzens entgegenwirken und zwischen sich zusammen mit dem Kolbenbolzen einen Hohlraum einschließen, wobei sich von der Querbohrung in den Kolben eine Ausnehmung zur Aufnahme des inneren Endes des Kurbelstangen-Kupplungsteiles sowie von der Querbohrung bis zum Kolbenboden ein Einschnitt erstreckt zur Aufnahme des äußeren Endes des Kurbelstangen-Kupplungsteiles.

Eine derartige Ausführungsform läßt sich der DE-B-1 049 628 entnehmen. Hier sind als Stopfen bezüglich ihrer Kräfteübertragung in radialer Richtung wirksame Stege, z. B. in Form von Scheiben oder Ringen vorgesehen, die im Bereich der Ringspalte zwischen den Stirnflächen des Pleuelauges und den inneren Stirnflächen der Kolbenaugen bzw. deren Nachbarschaft angeordnet sind. Die Stege sind durch Einpressen und Verschweißen in ihrer Lage gesichert und können auch sternförmig ausgebildet sein.

Ausgehend von diesem Stand der Technik liegt der Erfindung die Aufgabe zugrunde, eine Kolben-Baugruppe zu entwickeln, die einfach, preiswert und vergleichsweise leicht ist, sich einfach montieren läßt, den Austritt von Gasen aus dem Innenraum des Kolbenbolzens zuläßt und eine Durchbiegung des Kolbenbolzens noch wirksamer unterbindet.

Ausgehend von der eingangs beschriebenen Kolben-Baugruppe wird diese Aufgabe gemäß der Erfindung durch folgende Merkmale gelöst:

a)  Die Stopfen bestehen aus keramischem Material und weisen Öffnungen auf, durch die Gase aus dem zwischen den Stopfen eingeschlossenen Hohlraum nach außen austreten können;

b)  die in Richtung der Querbohrungsachse gemessene Axiallänge des Einschnitts ist größer als die der Ausnehmung;

c)  Kurbelstange und Kolben definieren zusammen zwei Überlappungsbereiche, die sich parallel zur Querbohrungsachse jeweils nach außen von der Außenkante des inneren Endes des Kurbelstangen-Kupplungsteiles zur Wandung des Einschnitts erstrecken;

d)  jeder Stopfen hat eine solche Axiallänge und innerhalb der Kolbenbolzenbohrung eine solche Axialstellung, daß er den zugeordneten Überlappungsbereich vollständig überbrückt.

Werden bei der zum Stand der Technik erläuterten Ausführungsform ringförmige oder sternförmige Stopfen verwendet, können die Gase durch die in diesen Stopfen vorgesehenen Öffnungen natürlich ebenfalls nach außen austreten. Jedoch ist die Notwendigkeit des Gasaustritts in der DE-B-1 049 628 nicht angesprochen. Da gemäß dieser Vorveröffentlichung die Stopfen auch aus Scheiben bestehen können, die dann keine Öffnungen für einen Gasaustritt besitzen, läßt sich die Notwendigkeit für die Anordnung von Gasaustrittsöffnungen dieser Vorveröffentlichung nicht ohne weiteres entnehmen.

Erfindungsgemäß ist es zweckmäßig, wenn Stopfen und Kolbenbolzen angenähert gleiche Wärmeausdehnungskoeffizienten aufweisen. Hierdurch wird auch bei unterschiedlichen Temperaturen ein konstanter Preßsitz sichergestellt.

Weitere Merkmale der Erfindung sind Gegenstand der Unteransprüche und werden anhand zweier Ausführungsbeispiele näher erläutert.

In der Zeichnung sind zwei als Beispiele dienende Ausführungsformen der Erfindung dargestellt. Es zeigt

Fig. 1 einen Längsschnitt durch eine Kolben-Baugruppe;

Fig. 2 einen Schnitt gemäß der Linie 2-2 in Fig. 1 und

Fig. 3 eine gegenüber Fig. 2 abgewandelte Ausführungsform im vergrößerten Maßstab im Querschnitt gemäß der Linie 3-3 in Fig. 1.

Eine Kolben-Baugruppe 10 umfaßt einen Kolben 12 mit einer durchgehenden Querbohrung 14. Von einem Mittelabschnitt der Querbohrung 14 erstreckt sich eine Ausnehmung 16 in den Kolben 12. In entgegengesetzter Richtung erstreckt sich von der Querbohrung 14 bis zum Kolbenende ein Einschnitt 18 mit einer rechten und linken Seitenwandung 34, 38. Die in Richtung der Querbohrungsachse gemessene Axiallänge des Einschnittes 18 ist größer als die der Ausnehmung 16.

Die Querbohrung 14 nimmt einen hohlzylindrischen Kolbenbolzen 20 aus Stahl auf, der in dieser Querbohrung durch nicht dargestellte, an den beiden Enden des Kolbenbolzens angeordnete Sprengringe drehbar gelagert ist. Der Außendurchmesser des hohlzylindrischen Kolbenbolzens 20 sowie seine Wandungsstärke sind groß genug, um ein Durchbiegen infolge von parallel zur Kolbenachse einwirkenden Kräften zu verhindern. Um jedoch Gewicht einzusparen ist die Wandungsstärke des Kolbenbolzens 20 sehr dünn gehalten, so daß ohne Verstärkungseinsatz eine Ovalverformung des Kolbenbolzens erfolgen müßte. Die Axialbohrung des Kolbenbolzens 20 ist mit dem Bezugszeichen 22 gekennzeichnet.

Eine Kurbelstange 24 weist ein durchbohrtes Kupplungsteil 26 auf, durch das der mittlere Abschnitt des Kolbenbolzens 20 geführt ist. Das innere Ende 28 des Kurbelstangen-Kupplungsteiles 26 wird von der vorstehend erläuterten Ausnehmung 16 aufgenommen, während das äußere Ende 30 des Kurbelstangen-Kupplungsteiles 26 von dem ebenfalls bereits erwähnten Einschnitt 18 aufgenommen wird. Der Zusammenhang der gegenseitigen Abmessungen von Kolben 12 und Kurbelstange 24 läßt sich ferner beschreiben durch Definition zweier Überlappungsbereiche 31, 33, die sich parallel zur Querbohrungsachse jeweils nach außen von der Außenkante 32, 36 des inneren Endes 28 des Kurbelstangen-Kupplungsteiles 26 zur Wandung 34, 38 des Einschnitts 18 erstrecken. Dabei wird unter Berücksichtigung des Spiels zwischen Kolben 12 und Kurbelstange 24 bei der Definition dieser Überlappungsbereiche einmal von der größtmöglichen linken Stellung und zum anderen von der größtmöglichen rechten Stellung der Kurbelstange ausgegangen. Das äußere Ende 30 des Kurbelstangen-Kupplungsteiles 26 weist eine an dem Kolbenbolzen 20 anliegende Fläche 40 auf, deren Axiallänge parallel zur Kolbenbolzenachse größer ist als die entsprechende Axiallänge der Ausnehmung 16. Die Axiallängen der Ausnehmung 16 sowie des Einschnitts 18 sind größer als die entsprechenden Breiten des inneren und äußeren Endes 28, 30 des Kurbelstangen-Kupplungsteiles 26, so daß sich beidseitig jeweils ein Spalt für ein freies Spiel ergibt.

In die Bohrung 22 des Kolbenbolzens 20 sind zwei Stopfen 42, 44 eingepreßt, die aus keramischem Material wie z. B. einem Siliziumkarbid bestehen können. Jeder Stopfen 42, 44 hat eine solche Axiallänge und innerhalb der Kolbenbolzenbohrung 22 eine solche Axialstellung, daß er den zugeordneten Überlappungsbereich 31 bzw. 33 vollständig überbrückt und sich jeweils bis jenseits der Enden dieser Überlappungsbereiche erstreckt.

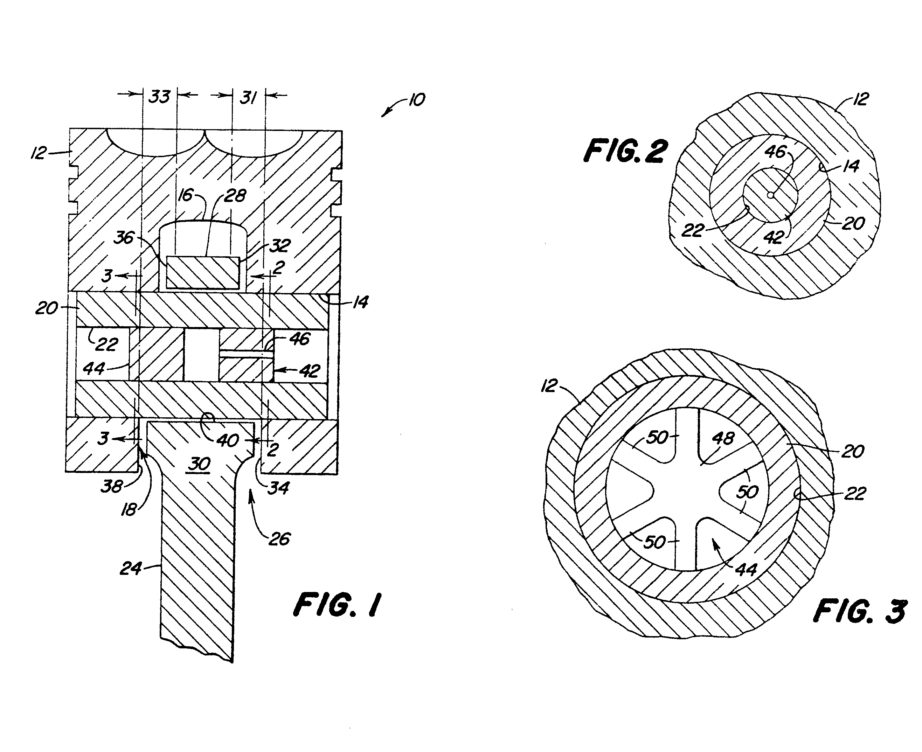

In einer bevorzugten Ausführungsform können beide Stopfen 42 die in Fig. 1 und Fig. 2 dargestellte Form aufweisen. In diesem Fall besteht dann der Stopfen 42 aus einer massiven Scheibe mit einer Axialöffnung 46, durch die Gase aus dem zwischen den beiden Stopfen eingeschlossenen Hohlraum nach außen entweichen können.

Bei einer Alternativlösung können beide Stopfen 44 die ebenfalls in Fig. 1 und in Fig. 3 dargestellte Form aufweisen. Dann weist jeder Stopfen 44 eine zentrale Nabe 48 auf, von der strahlenförmig mehrere Radialarme 50 ausgehen, die sich gegen die Innenwandung des Kolbenbolzens 20 abstützen. Hier können die Gase zwischen den mit Abstand angeordneten Radialarmen 50 austreten.

Da der Wärmeausdehnungskoeffizient von Siliziumkarbid ähnlich dem von Stahl für den Kolbenbolzen 20 ist, läßt sich ein weitgehend konstanter Preßsitz zwischen diesen beiden Teilen über einen weiten Temperaturbereich aufrechterhalten. Durch die bestimmte axiale Anordnung der beiden Stopfen innerhalb des Kolbenbolzens und den gewählten Abstand zwischen den beiden Stopfen sowie durch die gewählte Axiallänge der beiden Stopfen läßt sich eine Ovalverformung des Kolbenbolzens 20 verhindern. Durch diese Anordnung erhält man eine große Gewichtseinsparung im Vergleich zu dem Lösungsvorschlag, auf Verstärkungseinsätze vollständig zu verzichten und statt dessen die Ovalverformung des Kolbenbolzens 20 durch eine größere Wandstärke dieses Kolbenbolzens, also durch einen kleineren Innendurchmesser zu verhindern. Außerdem weist die neue Baugruppe eine erhöhte Festigkeit auf, da Keramikmaterial wie z. B. Siliziumkarbid eine höhere Steifigkeit aufweist als Stahl.

**Patentansprüche**

1. Kolben-Baugruppe (10), bestehend aus einem Kolben (12) mit einer durchgehenden Querbohrung (14), in die ein hohlzylindrischer Kolbenbolzen (20) eingesetzt ist, der durch das durchbohrte Kupplungsteil (26) einer Kurbelstange (24) geführt ist und zu seiner Verstärkung in seiner Bohrung (22) zwei eingepreßte Stopfen (42; 44) aufweist, die einer Verformung des Kolbenbolzens (20) entgegenwirken und zwischen sich zusammen mit dem Kolbenbolzen (20) einen Hohlraum einschließen, wobei sich von der Querbohrung (14) in den Kolben (12) eine Ausnehmung (16) zur Aufnahme des inneren Endes (28) des Kurbelstangen-Kupplungsteiles (26) sowie von der Querbohrung (14) bis zum Kolbenboden ein Einschnitt (18) erstrecken zur Aufnahme des äußeren Endes (30) des Kurbelstangen-Kupplungsteiles (26), gekennzeichnet durch folgende Merkmale:

a) die Stopfen (42; 44) bestehen aus keramischem Material und weisen Öffnungen (46; 48, 50) auf, durch die Gase aus dem zwischen den Stopfen (42; 44) eingeschlossenen Hohlraum nach außen austreten können;

b) die in Richtung der Querbohrungsachse gemessene Axiallänge des Einschnitts (18) ist größer als die der Ausnehmung (16);

c) Kurbelstange (24) und Kolben (12) definieren zusammen zwei Überlappungsbereiche (31, 33), die sich parallel zur Querbohrungsachse jeweils nach außen von der Außenkante (32, 36) des inneren Endes (28) des Kurbelstangen-Kupplungsteiles (26) zur Wandung (34, 38) des Einschnitts (18) erstrecken;

d) jeder Stopfen (42; 44) hat eine solche Axiallänge und innerhalb der Kolbenbolzenbohrung (22) eine solche Axialstellung, daß er den zugeordneten Überlappungsbereich (31, 33) vollständig überbrückt.

2. Kolben-Baugruppe nach Anspruch 1, dadurch gekennzeichnet, daß Stopfen (42; 44) und Kolbenbolzen (20) angenähert gleiche Wärmeausdehnungskoeffizienten aufweisen.

3. Kolben-Baugruppe nach Anspruch 1 oder 2, dadurch gekennzeichnet, daß jeder Stopfen (42) aus einer massiven Scheibe mit einer Axialöffnung (46) besteht.

4. Kolben-Baugruppe nach Anspruch 1 oder 2, dadurch gekennzeichnet, daß jeder Stopfen (44) eine zentrale Nabe (48) aufweist, von der strahlenförmig mehrere Radialarme (50) ausgehen, die sich am Kolbenbolzen (20) abstützen.

5. Kolben-Baugruppe nach einem der vorhergehenden Ansprüche, dadurch gekennzeichnet, daß die Stopfen (42; 44) aus einem Siliziumkarbid-Keramikmaterial bestehen.

**Claims**

1. Piston assembly (10), comprising a piston (12) having a cross bore (14) extending therethrough, in which a hollow cylindrical wrist pin (20) is mounted extending through an apertured coupling portion (26) of a connecting rod (24) and having, for its reinforcement, in its bore (22) two press-fitted plugs (42; 44) acting against deformation of said wrist pin (20) and including together with said wrist pin (20) a cavity, whereby a recess (16) extends from the cross bore (14) into said piston (12) for receiving the inner end (28) of said connecting-rod coupling portion (26) and whereby a cut (18) extends from said cross bore (14) to the piston bottom for receiving the outer end (30) of said connecting rod coupling portion (26), characterized by the following features:

   a) Said plugs (42; 44) are of ceramic material and have apertures (46; 48, 50) for exhausting gasses from the cavity included between said plugs (42; 44);

   b) the axial length of said cut (18) measured in the direction of the cross-bore axis is larger than that of said recess (16);

   c) connecting rod (24) and piston (12) define together two overlap zones (31, 33), each extending outwardly parallel to the cross-bore axis from the outer edge (32, 36) of the inner end (28) of said connecting-rod coupling portion (26) to the wall (34, 38) of said cut (18);

   d) each plug (42; 44) has such an axial length and such an axial position within the wrist-pin bore (22) that it completely spans the corresponding overlap zone (31, 33).

2. The piston assembly according to claim 1, wherein plugs (42; 44) and wrist pin (20) have substantially equivalent coefficients of thermal expansion.

3. The piston assembly according to claim 1 or 2, wherein each plug (42) comprises a solid disc with an axial aperture (46).

4. The piston assembly according to claim 1 or 2, wherein each plug (44) comprises a central core (48) having a plurality of wrist-pin engaging radial arms (50) projecting radially thereform.

5. The piston assembly according to one of the preceding claims, wherein said plugs (42; 44) are of a siliconcarbide ceramic material.

**Revendications**

1. Ensemble piston-bielle (10) constitué par un piston muni d'un perçage transversal (14) le traversant, dans lequel est inséré un axe de piston cylindrique creux (20) qui est guidé à travers la partie d'accouplement percée (26) d'une bielle (24) et qui comporte dans son perçage (22), pour son renforcement, deux noyaux ou tampons (42; 44) emmanchés à force, qui s'opposent à une déformation de l'axe de piston (20) et qui ménagent entre eux, conjointement à l'axe de piston (20), une cavité ou chambre, un évidement (16) s'étendant depuis le perçage transversal (14) dans le piston (12), pour la réception de l'extrémité intérieure (28) de la partie d'accouplement (26) de la bielle, et une entaille (18) s'étendant depuis le perçage transversal (14) jusqu'à l'extrémité du piston, pour la réception de l'extrémité extérieure (30) de la partie d'accouplement (26) de la bielle, caractérisé par les particularités suivantes:

   a) les noyaux ou tampons (42; 44) sont en matière céramique et comportent des orifices (46; 48, 50) par lesquels les gaz peuvent s'échapper vers l'extérieur à partir de la cavité ménagée entre les noyaux (42; 44);

   b) la longueur axiale de l'entaille (18) mesurée dans la direction de l'axe du perçage transversal est supérieure à celle de l'évidement (16);

   c) la bielle (24) et le piston (12) définissent ensemble deux zones de chevauchement (31, 33) qui s'étendent parallélement à l'axe du perçage transversal chaque fois vers l'extérieur depuis le bord extérieur (32, 36) de l'extrémité intérieure (28) de la partie d'accouplement (26) de la bielle, jusqu'à la paroi (34, 38) de l'entaille (18);

   d) chaque noyau (42; 44) a une longueur axiale telle et occupe à l'intérieur du perçage (22) de l'axe de piston une position axiale telle qu'il recouvre complètement la zone de chevauchement conjuguée (31, 33).

2. Ensemble piston-bielle suivant la revendication 1, caractérisé en ce que lex noyaux (42; 44) et l'axe de piston (20) ont des coefficients de dilatation thermique sensiblement égaux.

3. Ensemble piston-bielle suivant la revendication 1 ou 2 , caractérisé en ce que chaque noyau (42) est constitué par un disque plein muni d'un orifice axial (46).

4. Ensemble piston-bielle suivant la revendication 1 ou 2, caractérisé en ce que chaque noyau (44) comporte un moyeu central (48) à partir duquel s'étendent plusieurs bras radiaux (50) en forme de rayons, qui prennent appui sur l'axe de piston (20).

5. Ensemble piston-bielle suivant l'une quelconque des revendications précédentes, caractérisé en ce que les noyaux (42; 44) sont constitués par un matériau céramique en carbure de silicium.

*FIG.2*

*FIG. 3*

*FIG. 1*